(19) Europäisches Patentamt
European Patent Office
Office européen des brevets

(11) **EP 2 506 507 A1**

(12) **EUROPEAN PATENT APPLICATION**

(43) Date of publication:
**03.10.2012 Bulletin 2012/40**

(51) Int Cl.:
***H04L 12/56*** *(2006.01)*

(21) Application number: **11305365.6**

(22) Date of filing: **31.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Lazar, Marius**
**78141 Vélizy (FR)**
• **Treillard, Pascal**
**91620 Nozay (FR)**

(74) Representative: **Sciaux, Edmond et al**
**Alcatel-Lucent International**
**32, avenue Kléber**
**92700 Colombes (FR)**

Remarks:
Amended claims in accordance with Rule 137(2) EPC.

(54) **A method for controlling the throughput of a data transmitter as a function of the bandwidth of a data packet transmission link**

(57)    A method for controlling the throughput of a data transmitter as a function of the bandwidth of a data packet transmission link, comprises the steps of:
- transmitting a stream of data packets (t1-t2) to a receiver coupled at a far end of the link,
- determining a continuous series of data packets (t1'-t2'; t1 "-t2") in the stream of data packets;
- measuring the data amount sent by the transmitter while transmitting the series of data packets (t1-t2),
- measuring the data amount received by the receiver, while receiving substantially the same series of data packets (t1'-t2'; t1 "-t2"),
- sending (304; 508) to the data transmitter the measure of the received data amount,
- comparing (410; 608, 609) the measure of the received data amount and the measure of the sent data amount,
- then computing (406; 606) a data amount to be sent by the transmitter per unit of time so that the sent data amount will be adapted to the current bandwidth of the data transmission link.

FIG 1

EP 2 506 507 A1

**Description**

BACKGROUND OF THE INVENTION

Field of the invention

The present invention generally relates to a method for controlling the throughput of a data transmitter as a function of the bandwidth of a data packet transmission link.

Nowadays telecommunication networks use the Internet protocol family more and more frequently. Transmission of a signal (audio, video, or simple data) are transmitted from one point to another in data packets that do not always follow a same path between these two points because there is no reserved circuit for a given signal. Such a network comprises routers that choose a path for each packet whenever there are several possible paths, according to routing tables. The configuration of a network may vary for several reasons such as an interruption or congestion on a link. Routers automatically adapt their respective routing tables to the configuration of the network, in order to maintain a predefined quality of service, in particular to maintain a nominal bandwidth, as often as possible.

The bandwidth on a given data packet transmission link is not actually constant. It is always fluctuating. There are short term fluctuations due to the variations of the data load, and long term variations mainly due to transmission equipment failures. In order to prevent data packet losses when the bandwidth is decreasing, a data transmitter should adapt the bit rate of the transmission according to the current bandwidth. Thus it is desirable to measure the current bandwidth of this link and control the throughput of this data transmitter as a function of the current bandwidth of the data packet transmission link.

Description of the prior art

Some methods for measuring the bandwidth are known. They are called: ABget, Pathchirp, Path load, TOPP. They are well adapted to punctually measure the bandwidth of a data transmission link, i. e. at a given instant. However they are not well suited for continuously measuring a bandwidth because they use too many network resources. These known methods essentially consist in injecting test packets, at an input point of the network, receiving these test packets at an output point, and then calculating the bandwidth between these two points. A time stamp is inserted in each test packet at the input point. This time stamp indicates the departure time of the packet. It is read when the packet arrives at the output point. The departure time and the arrival time of each packet are inserted in an acknowledgement message that is sent back to the input point. When the acknowledgement message arrives at the input point, the departure time is subtracted from the arrival time, in order to determine the duration of the transit through the network. A bandwidth value is computed based on transit times of a plurality of test packets. For instance the document US 6.498.783 describes such a method.

A 3GPP standard, TR 25.902, proposes other methods for detecting a bandwidth reduction caused by a transmission equipment failure:

- either detecting packet losses by checking a sequence number inserted into each data packet,
- or detecting an increase of the transit time through the network, but this method converges very slowly.

These methods are well suited for synchronous time division networks (that set up circuits) and for asynchronous time division networks (that set up virtual circuits), but they are not well suited for networks that use the Internet protocol family. Thus, there is a need to provide a method better suited for measuring the bandwidth of a data packet transmission link and controlling the throughput of a data transmitter as a function of the measured bandwidth, in networks that use the Internet protocol family.

SUMMARY OF THE INVENTION

A first object of the invention is a method for controlling the throughput of a data transmitter as a function of the bandwidth of a data packet transmission link, characterized in that it comprises the steps of:

- transmitting a stream of data packets to a receiver coupled at a far end of the link,
- determining a continuous series of data packets in the stream of data packets;
- measuring the data amount sent by the transmitter while transmitting the series of data packets,
- measuring the data amount received by the receiver, while receiving substantially the same series of data packets,
- sending to the data transmitter the measure of the received data amount,
- comparing the measure of the received data amount and the measure of the sent data amount,
- then computing a data amount to be sent by the transmitter per unit of time so that the sent data amount will be adapted to the current bandwidth of the data transmission link.

This method enables a continuous control of the transmitter throughput, as a function of the current link bandwidth, without consuming a lot of network resources, because the measurement of the link bandwidth is made by using a part of the regular data stream to constitute test packets. In order to determine a peculiar series of packets, i. e. to identify them at the reception side, a very little overhead is needed. In order to periodically send, to the data transmitter, the measure of the received data amount, another very little overhead is needed.

In a peculiar implementation of the method according to the present invention,

- for measuring the data amount sent by the transmitter while transmitting a series of data packets, it comprises the step of determining this series by determining a measurement time interval with a local clock in the transmitter;
- for measuring the data amount received by a data receiver, while receiving substantially the same series of data packets, it comprises the step of determining this series by determining a measurement time interval with a local clock in the receiver, and periodically re-synchronizing this local clock with the local clock of the data transmitter by sending a marker from the transmitter to the receiver.

In another peculiar implementation of the method according to the present invention,

- for measuring the data amount sent by the transmitter while transmitting a series of data packets, it comprises the step of determining this series by determining a measurement time interval with a local clock in the transmitter, and sending, to the receiver, a first marker and a second marker respectively at the start and at the end of the series of data packets;
- for measuring the data amount received by a data receiver, while receiving substantially the same series of data packets, it comprises the step of determining this series by receiving, from the transmitter, a first marker and a second marker respectively indicating the start and the end of the series of data packets to be used for measuring the data amount received by the data receiver.

A second object of the invention is a data receiver for controlling the throughput of a data transmitter as a function of the bandwidth of a data packet transmission link, the two ends of which are respectively coupled to this receiver and to this transmitter, characterized in that it comprises:

- means for determining a continuous series of data packets in a stream of received data packets;
- means for measuring the data amount received by the data receiver, while receiving this series of data packets,
- means for sending to the data transmitter the measure of the received data amount.

A third object of the invention is a data transmitter the throughput of which is controlled as a function of the bandwidth of a data packet transmission link coupled to this transmitter, characterized in that it comprises:

- means for sending a stream of data packets to a data receiver coupled to a far end of the link,
- means for determining a continuous series of data packets in the stream of transmitted data packets,
- means for measuring the data amount transmitted by the data transmitter, while transmitting this series of data packets,
- means for receiving the measure of the received data amount measured by the data receiver while receiving the series of data packets determined by the transmitter.

Other features and advantages of the present invention will become more apparent from the following detailed description of embodiments of the present invention, when taken in conjunction with the accompanying drawings.

BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:

- Figure 1 illustrates a first variant of the method according to the invention.
- Figure 2 illustrates a second variant of the method according to the invention.
- Figure 3 represents a flow chart of the operations made by a first embodiment of the data receiver according to the invention, applying the first variant of the method according to the invention.
- Figure 4 represents a flow chart of the operations made by a first embodiment of the data transmitter according to the invention, applying the first variant of the method according to the invention.
- Figure 5 represents a flow chart of the operations made by a second embodiment of the data receiver according to the invention, applying the second variant of the method according to the invention.
- Figure 6 represents a flow chart of the operations made by a second embodiment of the data transmitter according to the invention, applying the second variant of the method according to the invention.

DETAILED DESCRIPTION OF THE PREFERRED EMBODIMENTS

In the following description, we will alternately use the wording "bandwidth" as well as the wording "amount of data" because the bandwidth of a data transmission link can be assessed by measuring an amount of data per time unit.

Generally data packets that are transmitted through a network that uses the Internet protocol family are assigned respective priority levels, indicated by six bit fields called differentiated Service Code Points, inserted into the packet headers. The routers take the priority level of each packet into account for choosing the packets to be sent first, and for choosing packets to be discarded when congestion occurs. So the method according to the invention is preferably implemented independently for each priority level. In the following description, we will consider data packets that all belong to a same priority level.

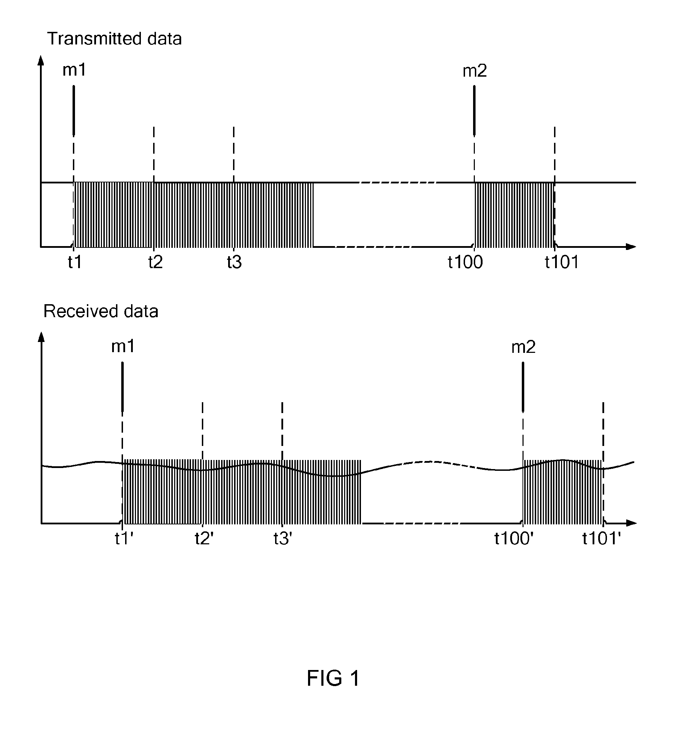

**Figure 1** illustrates a first variant of the method according to the invention. The upper graph represents the transmitted data throughput, of an example of data transmitter, and the lower graph represents the received data throughput at the other end of a data packet transmission link. In this example the transmitted throughput is constant. The received throughput is fluctuating because of the fluctuations of the bandwidth of the link. In particular, the bandwidth is fluctuating because the network data load is fluctuating. The bandwidth is periodically measured in the data transmitter by counting the amount of data sent during a measurement time interval having a fixed duration T (for instance T = 1 second). The measurement is reiterated with a period equal to T, so that the intervals are contiguous. The measurement time intervals for the sent data are determined by a local clock in the transmitter. The sent data amount is successively measured during the time intervals t1-t2, t2-t3, t100-t101, ....

The data transmitter periodically sends a packet containing a marker, with a fixed period N x T (for instance N = 100). It sends a first marker m1 at the instant t1, then a second marker m2 at the instant t100, etc.

The bandwidth is also measured in the data receiver by measuring the amount of data received during a time interval having a fixed duration T. The receiver regularly receives a packet containing a marker with an interval that is more or less than N x T, according to the fluctuations of the throughput. It receives the first marker m1 at the instant t1' (some time after t1 because of the transit delay), then the second marker m2 at the instant t100' (that does not generally coincide with t100 because the data throughput is fluctuating), etc.

The received data amount is successively measured during each time interval t1'-t2', t2'-t3', ... , determined by a local clock, in the receiver. The first received marker m1 triggers the first measurement time interval t1'-t2'. Then the local clock supplies a clock signal with a period T in order to define N successive time intervals for making N measurements in N contiguous time intervals. This clock is re-synchronized by the received markers. This clock stops the first measurement interval at instant t2' after a duration T, and immediately starts a new measurement interval t2'-t3'. The first received data amount measurement is made with almost the same data as the sent data amount measurement made in transmitter (except at the end of the interval t1'-t2' where there may be a little more or a little less data). The second measurement (made during the interval t2'-t3') is made with almost the same data as the measurement made in transmitter during the interval t2-t3 (except at the beginning and at the end of the interval where there may be a little more or a little less data).

The coincidence between the data used for the measurement in the transmitter and the data used for the measurement in the receiver is degrading for the successive time intervals.

The 100th interval is stopped either by the 100th clock signal or by the reception of the second marker m2 if this marker arrives before the 100th clock signal. In any case, the 101st interval is started when the marker m2 is received. So the marker m2 is used to resynchronize the data used for the measurement in the transmitter and the data used for the measurement in the receiver.

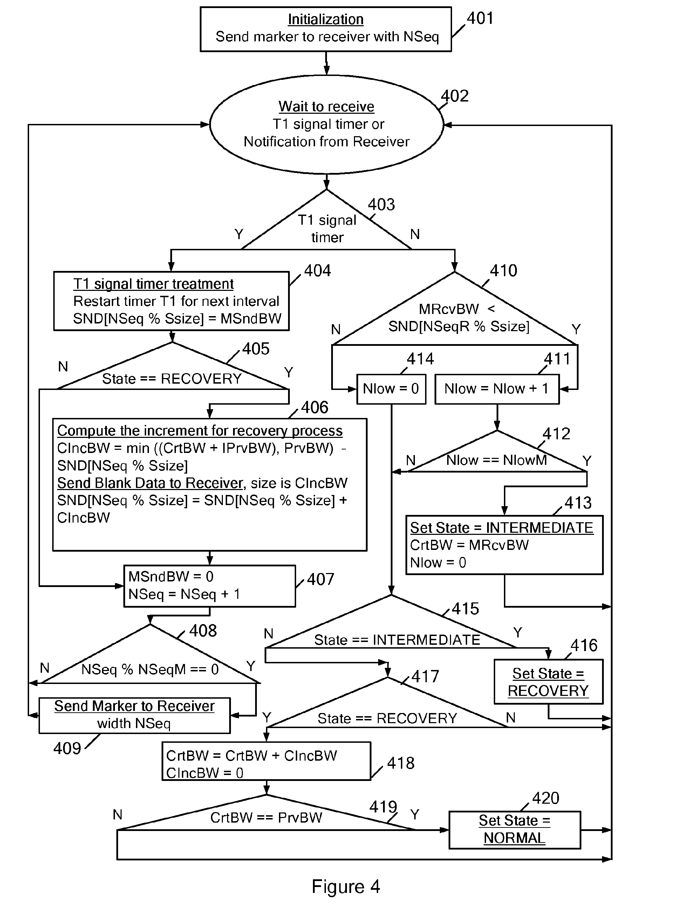

The measure of the data amount received in the receiver is sent back to the data transmitter via a reliable link, with a sequence number identifying the measurement time interval, this sequence number being reset each time a marker is received. In the data transmitter, the sent data amount and the received data amount, for a same time interval, are compared. A data amount to be sent during the next time interval is computed so that the sent data amount will be adapted to the current bandwidth of the data transmission link. Of course, if the current received data amount corresponds to the nominal bandwidth, the data amount to be sent during the next time interval will preferably be chosen equal to the nominal bandwidth. An implementation of the computing is described below with reference to figure 4.

The re-synchronization by the markers m1, m2, ... improves the accuracy of the control over the throughput of the data transmitter, because the measurement comparison is all the more accurate as the data are more identical. For instance, thanks to the reception of the marker m2, the data received during the interval t100'-t101' are almost the same data as the data sent by the transmitter during the interval t100-t101 (except at the end of the interval where there may be a little more or a little less data).

For controlling the throughput of the data transmitter as a function of the bandwidth of the data packet transmission link:

- the received data amount is measured in the receiver,
- its measure is sent back to the data transmitter via a reliable link, with a sequence number identifying the measurement time interval, this number being reset each time a marker is received;
- in the data transmitter, the sent data amount and the received data amount, for a same time interval, are compared;
- then a data amount to be sent during the next time interval is computed so that the sent data amount will be adapted to the current bandwidth of the data transmission link.

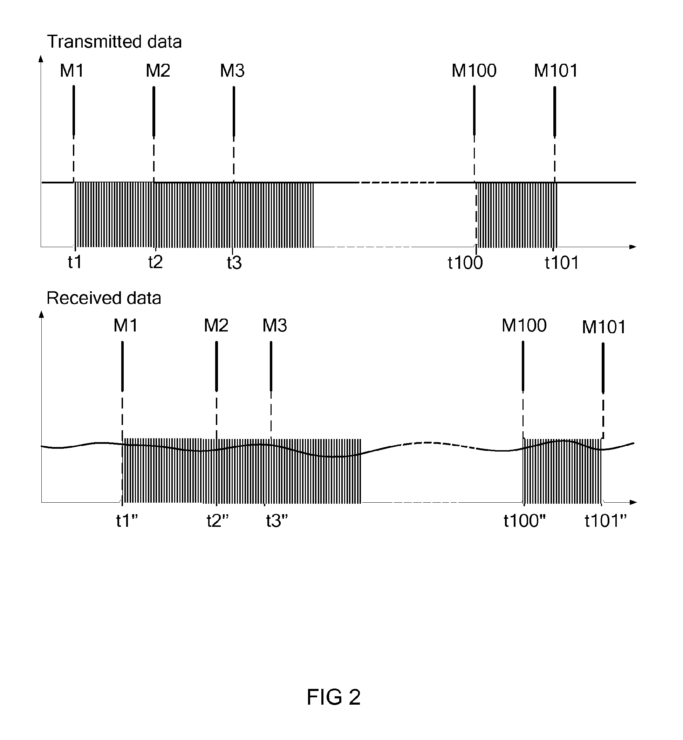

**Figure 2** illustrates a second variant of the method according to the invention. The upper graph represents the transmitted data throughput, and the lower graph represents the received data throughput. In this example, the transmitted throughput is constant. The received throughput is fluctuating. The bandwidth is periodically measured in the data transmitter by counting the amount of data sent during a time interval having a fixed duration T (for instance T = 1 second), and with a period also equal to T, so that the intervals are contiguous. The measurement time intervals for the sent data are determined by a local clock in the transmitter. The sent data amount is successively measured during the time intervals t1-t2, t2-t3, ... , t100-t101, .... The data transmitter periodically sends a packet containing a marker with a fixed period T. It sends a first marker M1 at the instant t1, then a second marker M2 at the instant t2, ... , a 100$^{th}$ marker M100 at the instant t100, etc.

The bandwidth is also measured in the data receiver by counting the amount of data received during a time interval having a duration that is roughly equal to T. In contrast with the first variant, the measurement time intervals are not determined by a local clock in the receiver; they are all triggered by the receptions of markers M1, M2, M3,..., M100, .... Thus the data used for measuring the received data amount are exactly the same as the data used for measuring the sent data amount, because their delineated by two successive markers.

The receiver regularly receives a packet containing a marker, two successive markers being received with an interval that is more or less than T, according to the fluctuations of the throughput. The reception of each marker stops the current measurement interval and immediately starts a new measurement interval. The receiver receives the first marker M1 at the instant t1" (some time after t1 because of the transit delay), then the second marker M2 at the instant t2" (that does not generally coincide with t2 because the data throughput is fluctuating), ... then the 100$^{th}$ marker M100 at the instant t100" (that does not generally coincide with t100 because the data throughput is fluctuating), etc. The received data amount is successively measured during the time intervals t1 "-t2", t2"-t3", ... , t100"-t101".

Thanks to the receptions of the markers M1 and M2, the first measurement in the receiver is made with exactly the same data as the measurement made in the transmitter (except if there is a packet loss between the markers M1 and M2). Thanks to the receptions of the markers M2 and M3, the second measurement in the receiver is made with exactly the same data as the measurement made in the transmitter (except if there is a packet loss between the markers M2 and M3)..... Thanks to the receptions of the markers M100 and M101, the 100$^{th}$ measurement in the receiver is made with exactly the same data as the measurement made in the transmitter (except if there is a packet loss between the markers M100 and M101). Thus the markers resynchronize the data used for the measurement in the transmitter and the data used for the measurement in the receiver, so the measurement comparison is more accurate as the data are more identical.

For controlling the throughput of the data transmitter as a function of the bandwidth of the data packet transmission link:

-   the received data amount is measured in the receiver,
-   its measure is sent back to the data transmitter via a reliable link, with a sequence number identifying the measurement time interval, this number being reset each time a marker is received;
-   in the data transmitter, the sent data amount and the received data amount, for a same time interval, are compared;
-   then a data amount to be sent during the next time interval is computed so that the sent data amount will be adapted to the current bandwidth of the data transmission link.

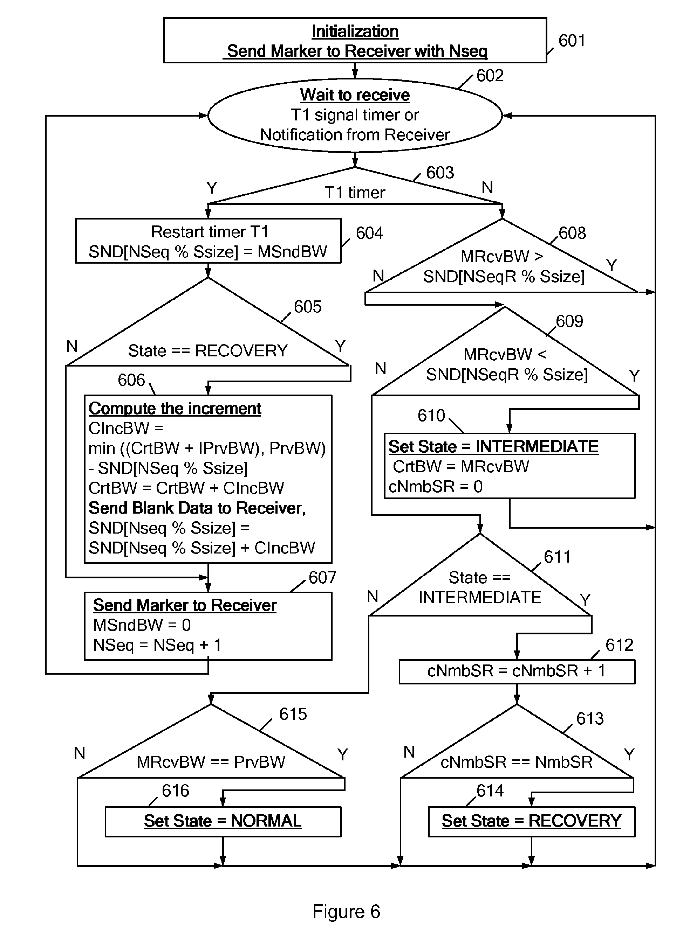

Of course, if the current received data amount corresponds to the nominal bandwidth, the data amount to be sent during the next time interval will be chosen equal to the nominal bandwidth. An implementation of the computing is described below with reference to figure 6.

In a peculiar implementation of the method according to the invention, the measured bandwidth/ amount of received data may be determined by calculating the average of three consecutive measures, in three contiguous time intervals, for smoothing the fluctuations of the bandwidth.

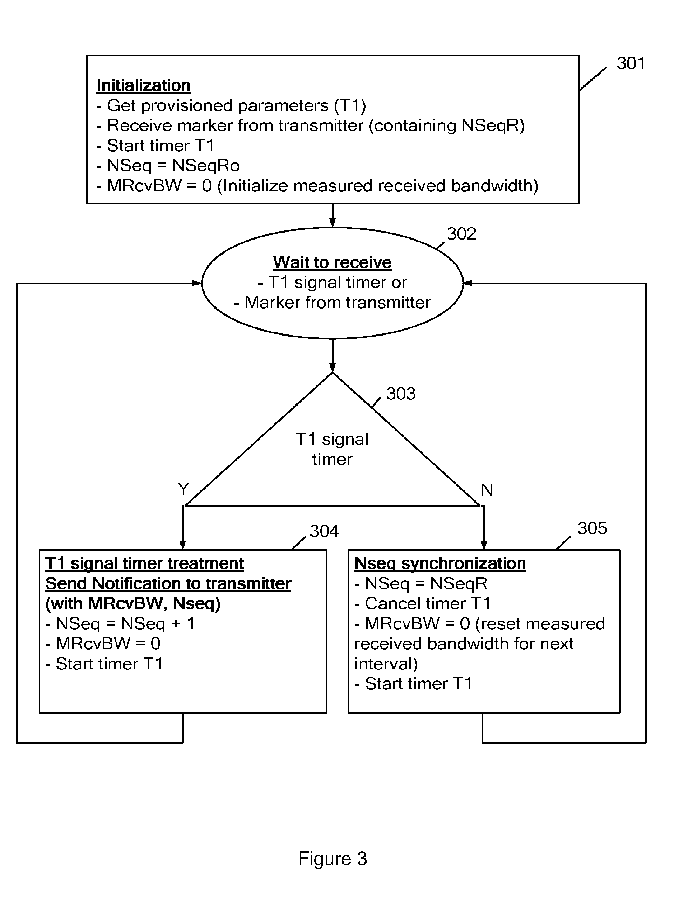

**Figure 3** represents a flow chart of the operations made by a first embodiment of the data receiver according to the invention, applying the first variant of the method according to the invention. During time intervals of constant duration T1, determined by a local clock, the transmitter measures the amount of data sent. During time intervals of constant durations T1, determined by another local clock, the receiver measures the amount of data received. Once every 100 intervals, the transmitter sends a marker to resynchronize the receiver and the transmitter, so that they substantially use a same series of data packets for measuring the sent data amount in the transmitter and the received data amount respectively.

Every measurement interval in the receiver has a sequential number NSeq. The receiver will re-initialize this sequential number NSeq when it receives a marker with a sequence number NseqR from the transmitter, and when it reaches a predetermined maximal value NSeqM (for instance NSeq = 100 in order to re-initialize after every 100th time interval). The transmitter provides this maximal value NSeqM to the receiver, along with a marker, in a synchronization message. The receiver will use this maximal value NSeqM as a base for the sequential numbering of its own measurement time intervals. The sequential number NSeq will enable identifying measured data in the transmitter and in the receiver for every measurement time interval. The receiver will send a notification to the transmitter, via a reliable link (like TCP or SCTP), at the end of every measurement interval. This notification will contain the amount MRcvBW of data received during the interval, and the corresponding sequence number NSeq.

This first embodiment of the receiver makes the following steps:

**Step 301**: Initialization:

- Get provisioned parameters (T1).
- Receive a marker (containing a received sequence number NseqR).
- Start timer T1.
- Initialize the value NSeq of a local sequence number counter with NSeqR.
- Reset the value MRcvBW of the received data amount/bandwidth measured by the receiver.

**Step 302:** Wait to receive (pending waiting the received data amount/bandwidth will be measured by the receiver into MRcvBW):

- either a T1 timer signal,
- or a marker from the transmitter.

**Step 303:**

- If a signal is received from the timer T1, make step 304.
- If a marker is received, make the step 305.

**Step 304:** A signal has been received from the timer T1:

- Send a notification to the transmitter, containing the current value MRcvBW of the received data amount, and the current value Nseq of the sequence number, corresponding to the current measurement interval.
- Increment the value of the sequence number: NSeq = NSeq + 1.
- Reset the value MRcvBW of the measured received data amount/bandwidth, for next interval.
- Restart timer T1.
- Then return to step 302.

**Step 305:** A marker has been received (before the end of the time interval T1):

- Resynchronize the value of the sequence number Nseq with the value NseqR received along with the marker.

- Reset the value MRcvBW of the measured received data amount/bandwidth, for next interval.
- Reset and restart timer T1.
- Then return to step 302.

**Figure 4** represents a flow chart of the operations made by a first embodiment of the data transmitter according to the invention, applying the first variant of the method according to the invention.

The transmitter will store the sent data amount in a register SND[] of a circular array, the index of the register SND[] in this array being computed by using the formula:

Index = NSeq % Ssize

where Nseq is the current sequence number for the measurement made by the transmitter, and where % Ssize means "modulo Ssize", with SSize being the dimension of the circular array (Ssize could be 10 for a maximum delay of about 3 seconds between receiver and transmitter for the notification). If the link could induce greater delays it would be recommended to have a bigger Ssize.

The transmitter will compare the received data amount MRcvBW (provided by the receiver) with the corresponding sent data stored into SND array at the

Index = NSeqR % Ssize.

NSeqR being a sequence number received with MRcvBW in the same notification sent by the receiver.

This first embodiment of the transmitter makes the following steps:

**Step 401:** Initialization:

- Get provisioned parameters:

    -- Nominal value PrvBW of the sent data amount/bandwidth,
    -- Time interval T1,
    -- Provisioned increment IPrvBW that will be used in the recovery process to regain the lost bandwidth.
    -- The maximal value NSeqM of the sequence number for the measurement time intervals in the transmitter, determining the period of sending markers, expressed as number of T1 intervals NSeqM = 100 in this example).
    -- The size Ssize of a circular memory array for storing the measures of the amounts of transmitted data.
    -- A threshold number NLowM, defining the number of measures indicating a bandwidth decrease, necessary to decide changing the state of the transmitter from NORMAL to INTERMEDIATE.

- Start timer T1.
- Reset the measured sent data amount/ bandwidth : MSndBW = 0.
- Initialize the value CrtBW of the current sent data amount/bandwidth to the value PrvBW of the nominal sent data amount/bandwidth (It determines the maximal amount of data that the transmitter is allowed to send during a T1 interval).
- Reset the sequence number NSeq of the measurement time intervals.
- Set the state of the transmitter to NORMAL.
- Reset the contents of all the registers of the array SND[ ] that will store the amounts of data sent during the time intervals.

**Step 402:** Wait to receive:

- either a T1 timer signal,
- or a notification from the receiver.

**Step 403:** if a T1 timer signal is received, make the step 404.
If a notification is received from the receiver make the step 410.

**Step 404:** A T1 timer signal has been received:

- Restart timer T1 for next time interval.
- Store the current value MSndBW of the measured amount of sent data, into the register SND [NSeq % Ssize].

**Step 405:** Check whether state is RECOVERY :

- If it is RECOVERY make step 406.
- If it is NORMAL or INTERMEDIATE make the step 407.

**Step 406:** state is RECOVERY (i. e. the sent data amount must be increased because the actual bandwidth is increasing towards its nominal value):

- Compute a new value CIncBW for the current bandwidth/sent data amount increment, to be used for recovery process, during the current time interval. The used bandwidth is progressively incremented in order to avoid a congestion that could cause packet losses. It is computed according to the formula:

  CIncBW = min ((CrtBW + IPrvBW), PrvBW) - SSndBW, where:

  -- CrtBW is the current sent data amount/bandwidth;
  -- IPrvBW is the provisioned increment to be used in the recovery process to regain the lost bandwidth;
  -- PrvBW is the nominal bandwidth i. e. the maximal data amount that may be sent by the transmitter;
  -- SSndBW is the amount of sent data amount/bandwidth for the previous interval.

- Increase the current sent data amount/bandwidth CrtBW with the current increment CIncBW:
- Send a supplement of data, the size of which is equal to this current increment CIncBW. As there is a high risk of losing these supplementary data, these supplementary data are blank data that are only used to test the link.
- Increment the amount of sent data, stored in the register
SND[NSeq % Ssize], with the current increment CIncBW.

**Step 407:**

- Reset the value MSndBW of the measured sent data amount/bandwidth for next interval.
- Increment the sequence number NSeq of the measurement intervals.

**Step 408:** Check whether the sequence number NSeq has reached its maximal value NSeqM (100 in our case):

- If it has reached its maximal value, make the step 409.
- If it has not reached its maximal value, return to the step 402.

**Step 409:** The sequence number NSeq has reached is maximal value NSeqM, i. e. a series of N measurement intervals is finished:

  Send a new marker to the receiver with its sequence number NSeq and return to step 402.

**Step 410:** A notification has been received from the receiver, this notification containing the value MRcvBW of the received data amount/bandwidth, and the sequence number NSeqR of the corresponding time interval:

  Check whether this value, MRcvBW, is lower than the value SND[NseqR % Ssize] of the sent data amount/bandwidth stored at the index NseqR % Ssize, designating the corresponding interval where the measure was made by the receiver :

-- If it is lower, i. e. if the bandwidth is decreasing, make the step 411.
-- If it is greater, i. e. if the bandwidth is stable or increasing, make the step 414.

**Step 411:** The bandwidth is lower than corresponding sent data amount/bandwidth: Increment the counter Nlow that counts the number of consecutive measures showing a decrease of the measured received data amount/bandwidth.

**Step 412:** Check whether the counter Nlow has reached its maximal value NlowM:

- If it has reached its maximal value, make the step 413.
- If it has not reached its maximal value, make the step 414.

If MRcvBW is lower than MSndBW during NlowM consecutive measurement intervals, it will be concluded that bandwidth has really decreased. So it is necessary to reduce the data throughput (Pass into INTERMEDIATE state). Preferably, NlowM is chosen equal to 3, or greater.

**Step 413:** The counter Nlow has reached its maximal value NlowM:

- Set state to INTERMEDIATE, because it is confirmed that the bandwidth has decreased.
- Reduce the value CrtBW of the current sent data amount/bandwidth used for sending data, to the value MRcvBW of the received data amount/bandwidth actually measured by the receiver.
- Reset the counter Nlow that counts the number of consecutive measures showing a decrease of the measured received data amount/bandwidth.
- Then return to the step 402.

**Step 414:** The value MRcvBW of the received data amount/bandwidth is greater or equal than the value SND[NseqR % Ssize] of the sent data amount/bandwidth, i. e. the bandwidth is recovering or normal: Reset the counter Nlow that counts the number of consecutive measures showing a decrease of the measured received data amount/bandwidth.

**Step 415:** Check whether the state is INTERMEDIATE:

- If it is INTERMEDIATE, make the step 416.
- If it is NORMAL, or RECOVERY, make the step 417.

**Step 416:** The state is INTERMEDIATE whereas the bandwidth is not decreasing anymore: Set state to RECOVERY and then return to step 402.

**Step 417:** The state is not INTERMEDIATE: Check whether the state is RECOVERY :

- If it is RECOVERY, make the step 418.
- If it is NORMAL, return to step 402.

**Step 418:** The state is RECOVERY. It is possible to cautiously increase the amount of data to be sent:

- Increment the value CrtBW of the current sent data amount/bandwidth with the current value ClncBW of the increment.
- Then reset the current value ClncBW of the increment.

**Step 419:** Check whether the current value CrtBW of the current sent data amount/bandwidth is equal to the nominal bandwidth PrvBW:

- If it is equal to the nominal bandwidth PrvBW, make the step 420.
- If it is not equal to the nominal bandwidth PrvBW, return to the step 402.

**Step 420:** The current value CrtBW of the current sent data amount/bandwidth used by the transmitter is equal to the nominal bandwidth, it is time to return to the normal state: Set state to NORMAL, and then return to step 402.

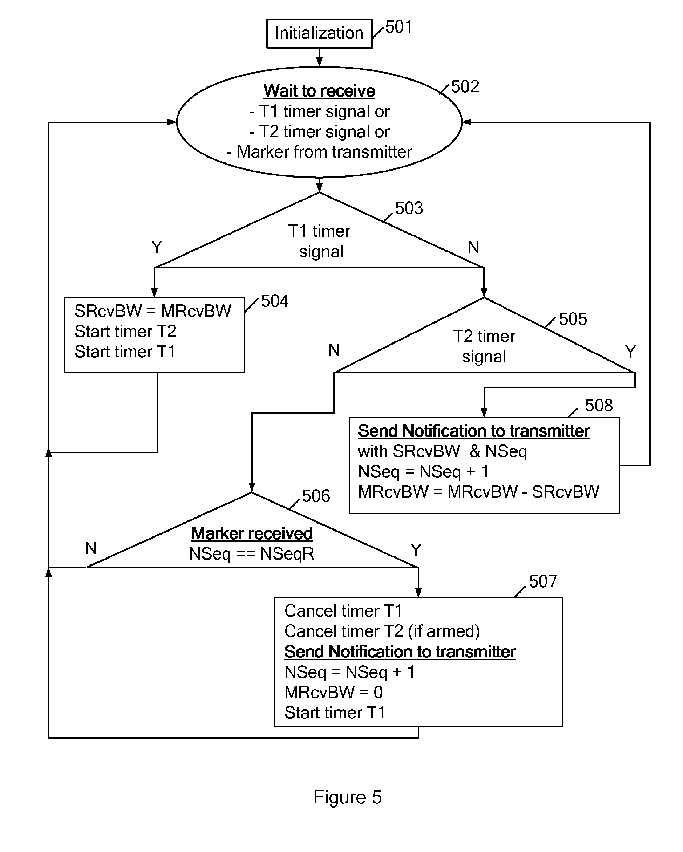

**Figure 5** represents a flow chart of the operations made by a second embodiment of the data receiver according to the invention, applying the second variant of the method according to the invention. The transmitter will send a marker for each measurement interval. The receiver will measure the value MRcvBW of the amount of received data in a measurement time interval defined by elapsed time between two consecutive received markers. So a same series of data is used for measuring a data amount in the transmitter and in the receiver (if there is no packet loss between the two markers). The receiver will send, to the transmitter, a notification containing this value MRcvBW and a sequence number Nseq corresponding to the measurement time interval, via a reliable link (like TCP or SCTP), after reception of every marker.

A marker may be lost during transmission. In order to deal with this case, a second timer T2 will be used: T2 is longer than T1 (T2 = 1.5 T1 for instance). After an elapsed time T2, if an expected marker has not bee received, this marker is considered as lost. The measurement of the amount of received data will be made along the full T2 interval, and then it is corrected to determine the amount corresponding to a time interval T1 only.

At initialization, the receiver will wait for a first marker, delivering a first value NSeqR of the sequence number. This first value of the sequence number NSeq will be incremented and used to check the validity of the sequence number values that will be contained in the following markers.

This second embodiment of the receiver makes the following steps:

Step 501: Initialization:

- Get provisioned parameters (T1).
- Receive a first marker (containing a value NSeqR of the sequence number).
- Start a timer T1.
- Initialize the current value NSeq of the local sequence number counter with NSeqR + 1.
- Reset the value MRcvBW of the received data amount/bandwidth measured by the receiver.

Step 502: Wait to receive:

- either a T1 timer signal,
- or a T2 timer signal,
- or a marker from the transmitter.

Step 503: check whether a T1 timer signal has been received:

- If a T1 timer signal has been received make the step 504.
- If a T1 timer signal has not been received make the step 505.

Step 504: A T1 timer signal has been received:

- Initialize the value SRcvBW of the saved measured received data amount/bandwidth with the current value MRcvBW of the measured received data amount/bandwidth (T1 timer signals indicates the end of a theoretical time interval). This value will be useful only if the expected marker never arrives. In this case, it will constitute an approximate measure of the received data amount/bandwidth instead of the accurate value that would have been measured between two successive markers. If the expected marker never arrives, the value MRcvBW of the measured received data amount/bandwidth will then continue to be updated until the timer T2 fires.
- Start timer T2.
- Re-start timer T1.
- Return to the step 502.

Step 505: A T2 timer signal or a marker has been received: Check whether it is a T2 timer signal:

- If a T2 timer signal has been received, make the step 508.
- If a T2 timer signal has not been received, then a marker has been received, make the step 506.

Step 506: A marker has been received: Check whether the value NSeqR that it contains is equal to the current value NSeq of the local counter for the sequence number counting the measurement intervals:

- If NSeqR is equal to Nseq, make the step 507.
- If NSeqR is not equal to Nseq, the received marker is invalid. Discard the received marker and return to the step 502.

Step 507: A valid marker has been received:

- Cancel timer T1.
- Cancel timer T2 (if armed)
- Send a notification to the transmitter, containing the current value MRcvBW of the received amount of received data amount (that is the accurate value measured between two successive markers) and the current value NSeq of the sequence number.
- Increment the value of the counter NSeq.
- Reset the value MRcvBW of the measured received data amount/bandwidth, for next interval.
- Start timer T1.
- Return to the step 502.

Step 508: The timer T2 has fired because a marker has been lost in the transmission. At this instant, the current value MRcvBW measured the received data amount corresponding to the T1 + T2 time interval. Two measures of received data amount/bandwidth must be determined: a first measure corresponding to a first time interval with duration T1, and a second measure corresponding to a second time interval spanning from the end of the interval T1 to the reception of a next marker (corresponding to T2). The value SRcvBW of the received data amount determined during the time interval T1 has been stored during step 504 when the timer T1 has fired. So the receiver makes the following operations:

- Send a notification to the transmitter, containing the value SRcvBW of the received data amount determined during the time interval T1 (instead of the time interval defined by two successive markers) and the current value NSeq of the sequence number counter.
- Then increment the value NSeq of the sequence number counter.
- Then determine a second received data amount corresponding to the next interval from the end of interval T1 to the reception of a next marker: It is calculated by subtracting from the current value stored into MRcvBW the value stored into SRcvBW corresponding to T1 interval (this in fact correspond to the measure of the amount of received data along the T2 interval.

$$MRcvBW = MRcvBW - SRcvBW$$

This difference is stored into the register MRcvBW. This value is not sent to the transmitter because it only corresponds to a time interval T2. The value in the register MRcvBW continues to be updated until the reception of the next marker. Then this register will contain the measure corresponding to the interval between the end of the time interval T1 and the arrival of the next marker. So, when this next marker arrives, the next notification will be able to carry a value of the measured received data amount.

**Figure 6** represents a flow chart of the operations made by a second embodiment of the data transmitter according to the invention, applying the second variant of the method according to the invention.

A circular memory array SND[] stores the values of the sent data amount/bandwidth. This array is indexed by the index: NSeq % Ssize, where % Ssize means modulo Ssize, with SSize being the dimension of the circular memory array (Ssize could be 10 for a maximum round trip delay of about 3 seconds between receiver and transmitter, for a notification).

This second embodiment of the transmitter makes the following steps:

**Step 601:** Initialization:

- Get provisioned parameters:

  -- Nominal value PrvBW of the sent data amount/bandwidth.
  -- Time interval T1.
  -- A provisioned increment IPrvBW that will be used for the recovery process, to increase the sent data amount/bandwidth up to its nominal value.
  -- A threshold number NmbSR, defining the number of measures indicating a bandwidth not decreasing, necessary to decide changing the state of the transmitter from INTERMEDIATE to RECOVERY.

- Start timer T1.
- Reset the value MSndBW of the sent data amount/bandwidth.
- Initialize the value CrtBW of the current sent data amount/bandwidth to the value PrvBW of the nominal sent data amount/bandwidth (It determines the maximal amount of data that the transmitter is allowed to send during a T1 interval).
- Reset the sequence number Nseq designating a measurement time interval, and a corresponding series of data packets, used for a measurement.
- Set the state of the transmitter to NORMAL.
- Reset the contents of the registers SND[] that will store the values of the measured sent data amount/bandwidth.

**Step 602:** Wait to receive:

- either a T1 timer signal,
- or a notification from the receiver.

**Step 603:** Check whether a T1 timer signal is received:

- if a T1 timer signal is received make the step 604.
- if a notification is received make the step 608.

**Step 604:** A T1 timer signal has been received:

- Restart timer T1 for next interval.
- Save the value MSndBW of the sent data amount/bandwidth in a register of the circular memory SND[], at the index [Nseq % Ssize].

**Step 605:** Check whether the state is RECOVERY:

- If it is RECOVERY make the step 606.
- If it is NORMAL or INTERMEDIATE, make the step 607.

**Step 606:** The state is RECOVERY:

- Compute a new value CIncBW of the current data amount/bandwidth increment for recovery process, according to the formula:

  CIncBW = min ((CrtBW + IPrvBW), PrvBW) - SND[Nseq % Ssize], where:

  -- CrtBW is the value of the current sent data amount/bandwidth,
  -- IPrvBW is the provisioned increment that will be used in the recovery process to progressively increase the sent data amount/bandwidth,
  -- PrvBW is the nominal sent data amount/bandwidth i. e. the maximal bandwidth that can be used by the transmitter,
  -- SND[Nseq % Ssize] is the sent data amount/bandwidth for the current interval (MSndBW).

- Increase the current sent data amount/bandwidth CrtBW with the current increment CIncBW. The sent data amount/bandwidth is progressively incremented in order to avoid a congestion that could cause packet losses.

- Send a supplement of data, the size of which is equal to this current increment CIncBW. As there is a high risk of losing these supplementary data, these supplementary data are blank data that are only used to test the link.
- Increment the value of the current sent data amount/bandwidth, stored in the register

SND[Nseq % Ssize], with the current increment CIncBW.

**Step 607:** The state it is NORMAL or INTERMEDIATE:

- Send a marker to the receiver with the sequence number Nseq.
- Reset the value MSndBW of the sent data amount/bandwidth for next interval.
- Increment the sequence number Nseq.
- return to step 602.

**Step 608:** A notification has been received from the receiver, this notification containing the value MRcvBW of the received data amount/bandwidth, and the corresponding receiver sequence number NSeqR:

Check whether the received data amount/bandwidth MRcvBW is greater than the value SND [NSeqR % Ssize] of the sent data amount/bandwidth, stored at the index NSeqR % Ssize corresponding to data amount/bandwidth sent by the transmitter at the corresponding time interval:

-- If it is lower or equal, make the step 609.
-- If it is greater, discard the notification, and return to step 602.

**Step 609:** A notification has been received from the receiver, this notification containing the value MRcvBW of the received data amount/bandwidth, and the sequence number NSeqR corresponding to the series of packets where the measure was made by the transmitter and the receiver:

Check whether the value MRcvBW is lower than the value SND[NseqR % Ssize] of the sent data amount/bandwidth at the corresponding interval:

-- If it is lower i. e. if the bandwidth is decreasing make the step 610.
-- If it is equal i. e. if the bandwidth is stable, make the step 611.

**Step 610:**

- Set state to INTERMEDIATE, because the received data amount/bandwidth is decreasing.
- Reduce the value CrtBW of the sent data amount/bandwidth used for sending data, to the value MRcvBW of the received data amount/ bandwidth presently measured by the receiver.
- Reset the counter cNmbSR used for RECOVERY state detection, which counts the number of consecutive measures showing that the received data amount/bandwidth is equal to sent by transmitter data amount/bandwidth in INTERMEDIARY state.
- Then return to the step 602.

**Step 611:** Check whether the state is INTERMEDIATE:

- If it is INTERMEDIATE, make the step 612.
- If it is NORMAL, or RECOVERY, make the step 615.

**Step 612:** The state is INTERMEDIATE, increment the counter cNmbSR that counts the number of intervals where the received data amount/bandwidth is equal to sent by transmitter data amount/bandwidth, while the state is INTERMEDIATE.

**Step 613:** Check whether the counter cNmbSR reaches the threshold NmbSR.

- If it reaches the threshold, make the step 614.
- If it does not reach the threshold, keep the state INTERMEDIATE, return to the step 602.

**Step 614:** Set the state to RECOVERY, because the received data amount/bandwidth is stable. Then return to step 602.

**Step 615:** The state is RECOVERY or NORMAL. Check whether the value MRcvBW of the received data amount/bandwidth is equal to the nominal value PrvBW of the sent data amount/bandwidth:

- If it is equal to PrvBW, the link has completely returned to normal conditions, make step 616.
- If it is not equal to PrvBW, the link has not completely returned to normal conditions, return to the step 602.

**Step 616:** The link has completely returned to normal conditions, set the state to NORMAL, then return to step 602.

**Claims**

1. A method for controlling the throughput of a data transmitter as a function of the bandwidth of a data packet transmission link, **characterized in that** it comprises the steps of:

- transmitting a stream of data packets (t1-t2) to a receiver coupled at a far end of the link,
- determining a continuous series of data packets (t1'-t2'; t1 "-t2") in the stream of data packets;
- measuring the data amount sent by the transmitter while transmitting the series of data packets (t1-t2),
- measuring the data amount received by the receiver, while receiving substantially the same series of data packets (t1'-t2'; t1 "-t2"),
- sending (304; 508) to the data transmitter the measure of the received data amount,
- comparing (410; 608, 609) the measure of the received data amount and the measure of the sent data amount,
- then computing (406; 606) a data amount to be sent by the transmitter per unit of time so that the sent data amount will be adapted to the current bandwidth of the data transmission link.

2. A method according to claim 1, **characterized in that**,

- for measuring the data amount sent by the transmitter while transmitting a series of data packets, it comprises the step of determining this series by determining a measurement time interval (t2-t3) with a local clock in the transmitter;
- for measuring the data amount received by a data receiver, while receiving substantially the same series of data packets, it comprises the step of determining this series by determining a measurement time interval (t2'-t3') with a local clock in the receiver, and periodically (t1, t100, t1', t100') re-synchronizing this local clock with the local clock of the data transmitter by sending a marker (m1, m2) from the transmitter to the receiver.

3. A method according to claim 1, **characterized in that**,

- for measuring the data amount sent by the transmitter while transmitting a series of data packets, it comprises the step of determining this series by determining a measurement time interval (t2-t3) with a local clock in the transmitter, and sending, to the receiver, a first marker (M1) and a second marker (M2) respectively at the start and at the end of the series of data packets;
- for measuring the data amount received by a data receiver, while receiving substantially the same series of data packets, it comprises the step of determining this series by receiving, from the transmitter, a first marker (M1) and a second marker (M2) respectively indicating the start and the end of the series of data packets to be used for measuring the data amount received by the data receiver.

4. A data receiver for controlling the throughput of a data transmitter as a function of the bandwidth of a data packet transmission link, the two ends of which are respectively coupled to this receiver and to this transmitter, **characterized in that** it comprises:

- means for determining a continuous series of data packets (t1'-t2'; t1 "-t2") in a stream of received data packets;
- means for measuring the data amount received by the data receiver, while receiving this series of data packets (t1'-t2'; t1 "-t2"),
- means for sending (304; 508) to the data transmitter the measure (MRcvBW; SRcvBW) of the received data amount.

5. A data receiver according to claim 4, **characterized in that** the means for determining a series of data packets (t1'-t2'; t1 "-t2") in a stream of received data packets comprise:

- means for receiving a marker (m1; M1),
- means for determining a time interval (t1'-t2') starting at the reception of said marker and stopping after a predetermined duration, the data packets received during this time interval constituting the series of data packets (t1'-t2'; t1 "-t2") to be used for measuring the data amount received by the data receiver while receiving the series of data packets (t1'-t2'; t1 "-t2") determined by the receiver.

6. A data receiver according to claim 4, **characterized in that** the means for determining a series of data packets (t1 "-t2") in a stream of received data packets comprise:

- means for receiving two marker (M1, M2),
- means for determining a time interval (t1 "-t2") starting at the reception of the first marker (M1) and stopping at the reception of the second marker (M2), the data packets received between the two markers constituting the series of data packets to be used for measuring the data amount received by the data receiver while receiving the series of data packets (t1'-t2'; t1"-t2") determined by the receiver.

7. A data transmitter the throughput of which is controlled as a function of the bandwidth of a data packet transmission link coupled to this transmitter, **characterized in that** it comprises:

- means for sending a stream of data packets to a data receiver coupled to a far end of the link,
- means for determining a continuous series of data packets (t1'-t2'; t1"-t2") in the stream of transmitted data packets,
- means for measuring the data amount transmitted by the data transmitter, while transmitting this series of data packets (t1'-t2'; t1 "-t2"),
- means for receiving (410; 608) the measure (MRcvBW; SRcvBW) of the received data amount measured by the data receiver while receiving the series of data packets (t1'-t2'; t1"-t2") determined by the transmitter.

**8.** A data transmitter according to claim 7, **characterized in that** the means for determining a continuous series of data packets in the stream of transmitted data packets comprise:

- means for sending a marker (m1) to the data receiver,
- means for detecting the data packets transmitted during a time interval (t1'-t2') starting at the transmission of said marker and stopping after a predetermined duration, the detected data packets constituting the series of data packets (t1'-t2'; t1 "-t2") to be used for measuring the data amount transmitted by the data transmitter.

**9.** A data transmitter according to claim 7, **characterized in that** the means for determining a continuous series of data packets in the stream of transmitted data packets comprise:

- means for sending two marker (M1, M2) to the data receiver,
- means for detecting the data packets transmitted between the two markers, the detected packets constituting the series of data packets (t1'-t2'; t1 "-t2") to be used for measuring the data amount transmitted by the data transmitter.

**Amended claims in accordance with Rule 137(2) EPC.**

**1.** A method for controlling the throughput of a data transmitter as a function of the bandwidth of a data packet transmission link, comprising the steps of:

- transmitting data packets to a receiver coupled at a far end of the link,
- periodically measuring a first bandwidth by measuring the data amount sent by the transmitter during a first measurement time interval (t1-t2) while transmitting a series of data packets,
- periodically measuring a second bandwidth by measuring the data amount received by the receiver during a second time interval (t1 "-t2") while receiving data packets,
- sending (508) to the data transmitter the measure of the received data amount,
- comparing (608, 609) the measure of the received data amount and the measure of the sent data amount,
- then computing (606) a data amount to be sent by the transmitter per unit of time so that the sent data amount will be adapted to the current bandwidth of the data transmission link;

**characterized in that**,

- for measuring the data amount sent by the transmitter during a first measurement time interval (t1-t2) while transmitting a series of data packets, it comprises the step of determining the first measurement time interval (t1-t2) with a local clock in the transmitter, and sending (601, 607), to the receiver, a first marker (M1) and a second marker (M2) respectively marking the start and the end of a series of data packets corresponding to the first measurement time interval (t1-t2);
- for measuring the data amount received by a data receiver, during a second time interval (t1"-t2"), it comprises the step of receiving (502, 506), from the transmitter, said first marker (M1) and said second marker (M2) respectively indicating the start and the end of the second time interval (t1"-t2").

**2.** A data receiver for controlling the throughput of a data transmitter as a function of the bandwidth of a data packet transmission link, the two ends of which are respectively coupled to this receiver and to this transmitter, comprising:

- means for receiving data packets,
- means for periodically measuring a bandwidth comprising means for measuring the data amount received by the data receiver, during a time interval (t1 "-t2"),
- means for sending (508) to the data transmitter the measure of the received data amount;

**characterized in that** the means for measuring the data amount received by the data receiver during a time interval (t1 "-t2") comprise means for determining a time interval (t1"-t2") starting at the reception (502) of the first marker (M1) and ending (506) at the reception of the second marker (M2).

**3.** A data transmitter the throughput of which is controlled as a function of the bandwidth of a data packet transmission link coupled to this transmitter, comprising:

    - means for sending data packets to a data receiver coupled to a far end of the link,
    - means for periodically measuring a first bandwidth by measuring the data amount sent by the transmitter during a first measurement time interval (t1-t2) determined by a local clock,
    - means for receiving (608) the measure of the received data amount, measured by the data receiver during a second time interval,
    - means for comparing (608, 609) the measure of the received data amount and the measure of the sent data amount,
    - and means for computing (606) a data amount to be sent by the data transmitter per unit of time so that the sent data amount will be adapted to the current bandwidth of the data transmission link;

**characterized in that** said means for periodically measuring the data amount transmitted by the data transmitter comprises means for sending (601, 607), to the receiver, a first marker (M1) and a second marker (M2) respectively marking the start and the end of the series of data packets corresponding to the first measurement time interval.

Transmitted data

Received data

FIG 1

Transmitted data

M1    M2    M3          M100    M101

t1    t2    t3          t100    t101

Received data

M1    M2    M3          M100    M101

t1"    t2"    t3"          t100"    t101"

FIG 2

**Initialization**
- Get provisioned parameters (T1)
- Receive marker from transmitter (containing NSeqR)
- Start timer T1
- NSeq = NSeqRo
- MRcvBW = 0 (Initialize measured received bandwidth)

301

**Wait to receive**
- T1 signal timer or
- Marker from transmitter

302

T1 signal timer

303

Y

N

**T1 signal timer treatment**
**Send Notification to transmitter**
**(with MRcvBW, Nseq)**
- NSeq = NSeq + 1
- MRcvBW = 0
- Start timer T1

304

**Nseq synchronization**
- NSeq = NSeqR
- Cancel timer T1
- MRcvBW = 0 (reset measured received bandwidth for next interval)
- Start timer T1

305

Figure 3

Figure 4

Initialization ⟋501

Wait to receive ⟋502
- T1 timer signal or
- T2 timer signal or
- Marker from transmitter

T1 timer ⟋503
signal
Y                    N

SRcvBW = MRcvBW ⟋504
Start timer T2
Start timer T1

T2 timer ⟋505
signal
N                    Y

Send Notification to transmitter ⟋508
with SRcvBW  & NSeq
NSeq = NSeq + 1
MRcvBW = MRcvBW - SRcvBW

Marker received ⟋506
NSeq == NSeqR
N                    Y

Cancel timer T1 ⟋507
Cancel timer T2 (if armed)
Send Notification to transmitter
NSeq = NSeq + 1
MRcvBW = 0
Start timer T1

Figure 5

Figure 6

Europäisches
Patentamt

European
Patent Office

Office européen
des brevets

# EUROPEAN SEARCH REPORT

Application Number

EP 11 30 5365

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/117930 A1 (CHAKARESKI JACOB [US] ET AL) 22 May 2008 (2008-05-22)<br>* abstract *<br>* paragraph [0002] - paragraph [0006] *<br>* paragraph [0019] - paragraph [0032] *<br>* figures 1-3 *<br>----- | 1-9 | INV.<br>H04L12/56 |
| X | US 2010/208732 A1 (RODBRO CHRISTOFFER ASGAARD [SE] ET AL)<br>19 August 2010 (2010-08-19)<br>* abstract *<br>* paragraph [0018] - paragraph [0024] *<br>* paragraph [0063] *<br>----- | 1-9 | |
| A | US 2010/274872 A1 (HARRANG JEFFREY PAUL [US] ET AL) 28 October 2010 (2010-10-28)<br>* paragraph [0058] - paragraph [0070] *<br>----- | 1-9 | |
| | | | TECHNICAL FIELDS SEARCHED (IPC)<br><br>H04L |

The present search report has been drawn up for all claims

| Place of search | Date of completion of the search | Examiner |
|---|---|---|
| Munich | 15 July 2011 | Plata-Andres, Isabel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.......................................................................................

& : member of the same patent family, corresponding
   document

EPO FORM 1503 03.82 (P04C01)

**EP 2 506 507 A1**

## ANNEX TO THE EUROPEAN SEARCH REPORT
## ON EUROPEAN PATENT APPLICATION NO.

EP 11 30 5365

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2011

| Patent document cited in search report | Publication date | Patent family member(s) | Publication date |
|---|---|---|---|
| US 2008117930 A1 | 22-05-2008 | US 2010215053 A1 | 26-08-2010 |
| US 2010208732 A1 | 19-08-2010 | NONE | |
| US 2010274872 A1 | 28-10-2010 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6498783 A